# EUROPÄISCHE PATENTANMELDUNG

(11) **EP 4 678 947 A1**
(43) Veröffentlichungstag der Anmeldung: **14.01.2026**
(21) Anmeldenummer: 25178121.7
(22) Anmeldetag: 22.05.2025
(51) Int. Cl.: F16H 57/04, F16H 61/00, F16H 61/02, B60K 1/00

(54) **ANTRIEBSANORDNUNG UND EIN FAHRZEUG MIT EINER ANTRIEBSANORDNUNG**

(30) Priorität: 21.06.2024 DE 102024205780
(71) Anmelder: Robert Bosch GmbH, 70442 Stuttgart (DE)
(72) Erfinder: Hofmann, Tilo, 71696 Moeglingen (DE); Fuchs, Alexander, 70806 Kornwestheim (DE)

(57) **Zusammenfassung**

Die Erfindung betrifft eine Antriebsanordnung (10) für ein Fahrzeug, insbesondere ein Kraftfahrzeug, mit einem Kühlkreislauf (12), in dem ein Kühlmittel (14) gefördert wird, umfassend eine elektrische Maschine (16) mit einem Stator (18) und einem Rotor (20), ein Getriebe (22), eine Parksperre (24) und/oder eine Koppeleinrichtung (26) und eine Steuereinrichtung (28) zum Steuern eines Kühlmittelflusses durch den Kühlkreislauf (12), wobei die Steuereinrichtung (28) eingerichtet ist, um die Parksperre (24) und/oder die Koppeleinrichtung (26) jeweils mittels des Kühlmittels (14) zu betätigen. Die Erfindung betrifft zudem ein Fahrzeug, insbesondere ein Kraftfahrzeug, mit einer derartigen Antriebsanordnung (10).

## Beschreibung

### Stand der Technik

Die Erfindung betrifft eine Antriebsanordnung für ein Fahrzeug, insbesondere ein Kraftfahrzeug, mit Merkmalen des Anspruchs 1 sowie ein Fahrzeug, insbesondere ein Kraftfahrzeug, mit Merkmalen des nebengeordneten Anspruchs.

In einer Antriebsanordnung mit einer elektrischen Maschine, insbesondere in elektrifizierten Achsen (E-Achsen), entsteht während des Betriebes Wärme. Um die Antriebsanordnung möglichst effizient zu betreiben ist daher ein Temperaturmanagement nötig. Hierzu kann ein Kühlkreislauf mit einem innerhalb des Kühlkreislaufs mittels einer Förderpumpe geförderten Kühlmittels verwendet werden.

DE 10 2019 117 637 A1 offenbart eine Antriebsanordnung mit einer elektrischen Maschine und einem Kühlkreislauf, der zur Kühlung der elektrischen Maschine eingesetzt wird.

Zusätzlich zu einem derartigen Kühlkreislauf, der der Kühlung und/oder der Schmierung dient, weist eine Antriebsanordnung in der Regel weitere elektromechanische Komponenten auf, wie bspw. eine Parksperre oder eine Klauenkupplung, die klassischen Getriebefunktionen erfüllen.

Nachteilig dabei ist, dass derartige Antriebsanordnungen einen viel Bauraum benötigen und großes Gewicht mit sich bringen, was die Kosten steigen lässt.

### Offenbarung der Erfindung

Erfindungsgemäß wird eine Antriebsanordnung für ein Fahrzeug, insbesondere ein Kraftfahrzeug, vorgeschlagen. Die Antriebsanordnung umfasst einen Kühlkreislauf, in dem ein Kühlmittel gefördert wird. Kühlkreislauf umfasst eine elektrische Maschine mit einem Stator und einem Rotor. Der Kühlkreislauf umfasst ein Getriebe zum Übertragen eines Drehmoments innerhalb der Antriebsanordnung. Der Kühlkreislauf umfasst eine Parksperre zum Blockieren und/oder Freigeben einer Drehmomentübertragung innerhalb der Antriebsanordnung. Alternativ oder zusätzlich zu der Parksperre umfasst der Kühlkreislauf eine Koppeleinrichtung zum Koppeln und/oder Trennen von mindestens zwei Komponenten der Antriebsanordnung. Die Antriebsanordnung umfasst eine Steuereinrichtung zum Steuern eines Kühlmittelflusses durch den Kühlkreislauf. Die Steuereinrichtung ist eingerichtet, um mittels Kühlmittel die Parksperre und/oder die Koppeleinrichtung zu betätigen.

Hierdurch ist eine Betätigung der Parksperre und/oder der Koppeleinrichtung mittels des im Kühlkreislauf zirkulierenden Kühlmittels und insbesondere unter Verwendung des gleichen Druckniveaus (Niederdruckniveau von kleiner 10 bar) umsetzbar. Auf eine separate Elektromechanik zur Betätigung der Parksperre und/oder der Koppeleinrichtung kann verzichtet werden. Die Antriebsanordnung kann so kompakter und kostengünstiger umgesetzt werden.

Das Kühlmittel kann eine Flüssigkeit, insbesondere Wasser und/oder Öl, sein. Das Kühlmittel kann auch als Schmiermittel dienen und eine schmierende Wirkung aufweisen. Mit anderen Worten, das Kühlmittel kann zur Kühlung und/oder Schmierung eingesetzt werden. Insbesondere kann das Kühlmittel auch ein Schmiermittel sein. Das Kühlmittel bzw. Schmiermittel kann flüssig ausgebildet, insbesondere Öl, sein.

Die Antriebsanordnung kann bspw. als E-Achse ausgebildet sein oder Bestandteil einer E-Achse bilden.

Gemäß einer Weiterbildung der Antriebsanordnung kann die Steuereinrichtung zum Steuern eines Kühlmittelflusses durch die elektrische Maschine, den Stator den Rotor und/oder das Getriebe eingerichtet sein.

Hierdurch kann das Kühlmittel über die Komponenten mit der größten Verlustwärme (bspw. den Stator, den Rotor und/oder das Getriebe) geleitet werden, um die Wärmeausbeute bei einem begrenzten Kühlmittel-Volumenstrom zu maximieren. Es ist denkbar, dass hierzu ein aktives bzw. gezieltes Heizen, bspw. ein ineffizienter Betrieb der elektrischen Maschine und/oder einer Förderpumpe, umgesetzt werden kann.

Gemäß einer Weiterbildung der Antriebsanordnung kann der Kühlkreislauf einen Wärmetauscher zum Abtransport von Wärme (aus dem Kühlkreislauf) umfassen. Der Wärmetauscher kann mit einem externen Kühlkreislauf thermisch gekoppelt sein. Der externe Kühlkreislauf kann eingerichtet sein, um die Wärme nach extern abzutransportieren.

Hierdurch kann die Effizienz des Kühlkreislaufes und damit der Antriebsanordnung weiter optimiert werden

Gemäß einer Weiterbildung der Antriebsanordnung kann der Wärmetauscher mittels einer Bypass-Leitung überbrückbar ausgebildet sein. Die Steuereinrichtung kann zum Steuern eines Kühlmittelflusses über den Wärmetauscher eingerichtet sein. Das Kühlmittel kann wahlweise durch den Wärmetauscher oder am Wärmetauscher vorbei (mittels der Bypass-Leitung) geleitet werden.

Hierdurch kann die Effizienz des Kühlkreislaufes und damit der Antriebsanordnung weiter optimiert werden

Gemäß einer Weiterbildung der Antriebsanordnung kann der Kühlkreislauf einen Kühlmittelsumpf zum Bevorraten des Kühlmittels, einen Filter zum Filtern des Kühlmittels und eine Kühlmittelpumpe zum Fördern des Kühlmittels innerhalb des Kühlkreislaufes umfassen.

Hierdurch kann ein Zirkulieren des Kühlmittels innerhalb des Kreislaufes mit einfachen Mitteln umgesetzt werden.

Gemäß einer Weiterbildung der Antriebsanordnung kann die Kühlmittelpumpe als eine Niederdruckpumpe ausgebildet sein. Die Kühlmittelpumpe kann zur Erzeugung eines Druckes von maximal 10 bar eingerichtet sein (Niederdruckpumpe).

Hierdurch kann das gleiche (Nieder)Druckniveau für das Leiten des Kühlmittels durch die Komponenten des Kühlkreislaufs (bspw. Stator, Rotor und/oder Getriebe) als auch zum Betätigen der Parksperre und/oder der Koppeleinrichtung benutzt werden. Auf eine separate Pumpe kann verzichtet werden.

Gemäß einer Weiterbildung der Antriebsanordnung kann die Steuereinrichtung mindestens ein Ventil, insbesondere mehrere Ventile, umfassen oder daraus ausgebildet sein. Das Ventil kann als ein thermostatisches Ventil, ein elektrohydraulisches Ventil, ein Schaltventil und/oder ein Regelventil ausgebildet sein.

Hierdurch kann die Steuereinrichtung mit einfachen Mitteln umgesetzt werden.

Gemäß einer Weiterbildung der Antriebsanordnung kann die Koppeleinrichtung als eine Trennkupplung, Lamellenkupplung und/oder Klauenkupplung ausgebildet sein. Die Koppeleinrichtung kann eingerichtet sein, um die elektrische Maschine von dem Getriebe abzukoppeln bzw. die elektrische Maschine mit dem Getriebe zu koppeln (Disconnect Funktion).

Hierdurch kann die Koppeleinrichtung mit einfachen Mitteln umgesetzt werden.

Gemäß einer Weiterbildung der Antriebsanordnung kann die Koppeleinrichtung über mindestens einen Hydraulikzylinder bzw. einen hydraulischen Zylinder betätigbar ausgebildet sein. Der Hydraulikzylinder kann mittels des Kühlmittels betrieben werden. Mit anderen Worten, das Kühlmittel des Kühlkreislaufs dient insbesondere als Hydraulikflüssigkeit des Hydraulikzylinders.

Hierdurch lässt sich das Betätigen der Koppeleinrichtung mittels des Kühlmittels, dass in dem Hydraulikzylinder als Hydraulikfluid fungiert, mit einfachen Mitteln umsetzen.

Erfindungsgemäß wird ein Fahrzeug, insbesondere ein Kraftfahrzeug, mit einer Antriebsanordnung gemäß obiger Ausführungen vorgeschlagen.

Hinsichtlich der mit dem Fahrzeug erzielbaren Vorteile wird auf die diesbezüglichen Ausführungen zur Antriebsanordnung verwiesen. Zur weiteren Ausgestaltung des Fahrzeugs können die im Zusammenhang mit der Antriebsanordnung beschriebenen und/oder die nachfolgend noch erläuterten Maßnahmen dienen.

Nachfolgend werden Ausführungsformen der Erfindung unter Bezugnahme auf die beiliegenden Zeichnungen erläutert. Es zeigen:
- Figur 1: eine schematische Darstellung einer Antriebsanordnung nach einem ersten Ausführungsbeispiel;
- Figur 2: eine schematische Darstellung der Antriebsanordnung nach einem zweiten Ausführungsbeispiel.

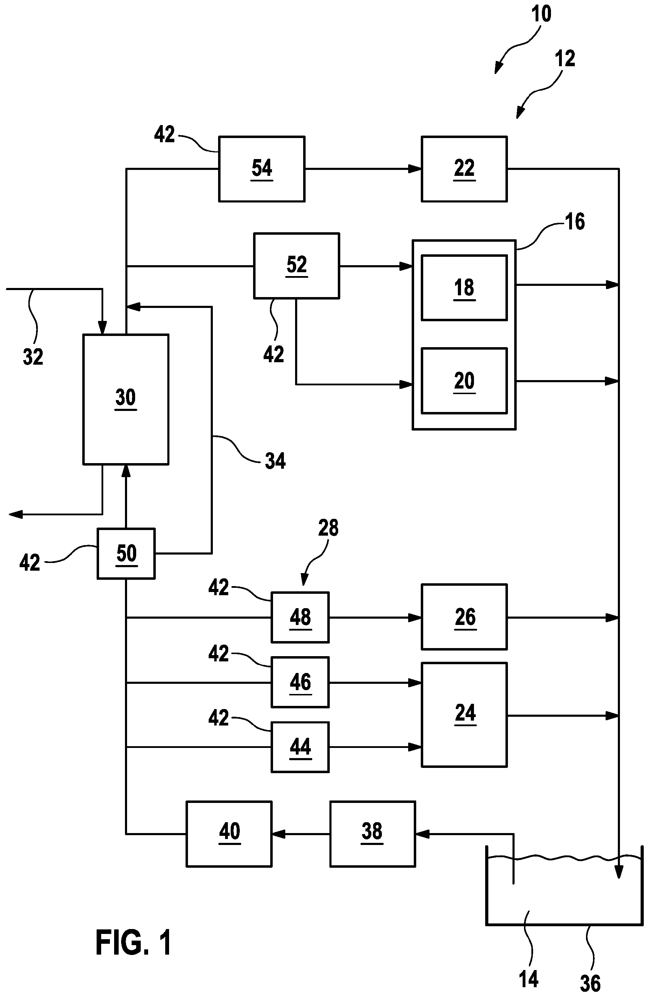

Die Antriebsanordnung trägt in Figur 1 insgesamt das Bezugszeichen 10. Die Antriebsanordnung 10 ist für ein Fahrzeug, insbesondere ein Kraftfahrzeug eingerichtet. Die Antriebsanordnung 10 umfasst einen Kühlkreislauf 12, in dem ein Kühlmittel 14 gefördert wird.

Der Kühlkreislauf 12 umfasst eine elektrische Maschine 16 mit einem Stator 18 und einem Rotor 20. Der Kühlkreislauf 12 umfasst ein Getriebe 22 zum Übertragen eines Drehmoments innerhalb der Antriebsanordnung 10. Der Kühlkreislauf 12 umfasst eine Parksperre 24 zum Blockieren und/oder Freigeben einer Drehmomentübertragung innerhalb der Antriebsanordnung 10. Alternativ oder zusätzlich zur Parksperre 24 umfasst die Antriebsanordnung 10 eine Koppeleinrichtung 26 zum Koppeln und/oder Trennen von mindestens zwei Komponenten der Antriebsanordnung 10. Der Kühlkreislauf 12 umfasst eine Steuereinrichtung 28 zum Steuern eines Kühlmittelflusses durch den Kühlkreislauf 12. Die Steuereinrichtung 28 ist eingerichtet, um die Parksperre 24 und/oder die Koppeleinrichtung 26 jeweils mittels des Kühlmittels 14 (bzw. des Kühlmittelflusses) zu betätigen.

Das Getriebe 22 und die elektrische Maschine 16 können im Kühlkreislauf 12 parallel oder seriell geschaltet sein.

Die Koppeleinrichtung 26 kann als eine Trennkupplung, Lamellenkupplung und/oder Klauenkupplung ausgebildet sein. Die Koppeleinrichtung 26 kann insbesondere zum Koppeln der elektrischen Maschine 16 mit dem Getriebe 22 (Herstellen einer Drehmomentübertragung zwischen der elektrischen Maschine 16 und dem Getriebe 22) ausgebildet sein. Die Koppeleinrichtung 26 kann insbesondere zum Trennen der elektrischen Maschine 16 von dem Getriebe 22 (Trennen einer Drehmomentübertragung zwischen der elektrischen Maschine 16 und dem Getriebe 22) ausgebildet sein (Disconnect Funktion).

Die Koppeleinrichtung 26 kann über mindestens einen Hydraulikzylinder betätigbar ausgebildet sein. Der Hydraulikzylinder kann mittels des Kühlmittels 14 betrieben werden.

Die Steuereinrichtung 28 kann zum Steuern eines Kühlmittelflusses durch die elektrische Maschine 16, den Stator 18, den Rotor 20 und/oder das Getriebe 22 eingerichtet sein.

Die Steuereinrichtung 28 kann mindestens ein Ventil 42 umfassen oder daraus ausgebildet sein. Das Ventil 42 kann als ein thermostatisches Ventil, ein elektrohydraulisches Ventil, ein Schaltventil und/oder ein Regelventil ausgebildet sein. Die Steuereinrichtung 28 bzw. deren Ventil 42 oder Ventile 42 können in unmittelbarer Nähe der jeweiligen mittels der Ventile 42 zu schaltenden Komponenten der Antriebsanordnung 10 angeordnet sein. Die Steuereinrichtung 28 bzw. deren Ventile 42 können in einem Hydraulikmodul integriert oder an dem Hydraulikmodul angeordnet sein.

Der Kühlkreislauf 12 kann einen Wärmetauscher 30 zum Abtransport von Wärme umfassen. Der Wärmetauscher 30 kann mit einem externen Kühlkreislauf 32 thermisch gekoppelt sein. Der externe Kühlkreislauf 32 kann eingerichtet sein, um die Wärme nach extern, also aus dem Kühlkreislauf 12 der Antriebsanordnung 10, abzutransportieren.

Der Wärmetauscher 30 kann mittels einer Bypass-Leitung 34 überbrückbar ausgebildet sein. Die Steuereinrichtung 28 kann zum Steuern eines Kühlmittelflusses über den Wärmetauscher 30 eingerichtet sein.

Der Kühlkreislauf 12 kann einen Kühlmittelsumpf 36 zum Bevorraten des Kühlmittels 14, einen Filter 38 zum Filtern des Kühlmittels 14 und eine Kühlmittelpumpe 40 zum Fördern des Kühlmittels 14 innerhalb des Kühlkreislaufes 12 umfassen.

Die Kühlmittelpumpe 40 kann als eine Niederdruckpumpe ausgebildet sein. Die Kühlmittelpumpe 40 kann zur Erzeugung eines Druckes von maximal 10 bar eingerichtet sein.

Der Fluss des Kühlmittels 14 im Kühlkreislauf 12 ist vorliegend wie folgt:
Das Kühlmittel 14 wird im Kühlmittelsumpf 36 bevorratet. Das Kühlmittel 14 wird mittels der Kühlmittelpumpe 40 gefördert. Das Kühlmittel 14 wird aus dem Kühlmittelsumpf 36 durch den Filter 38 und die Kühlmittelpumpe 40 geleitet. Das Kühlmittel 14 wird anschließend zu der Parksperre 24, der Koppeleinrichtung 26 und dem Wärmetauscher 30 geleitet. Nach der Parksperre 24 und nach der Koppeleinrichtung 26 wird das Kühlmittel 14 jeweils zurück in den Kühlmittelsumpf 36 geleitet. Nach dem Wärmetauscher 30 wird das Kühlmittel 14 zum einen durch das Getriebe 22 und anschließend zurück in den Kühlmittelsumpf 36 gleitet. Zum anderen wird das Kühlmittel 14 nach dem Wärmetauscher 30 durch die elektrische Maschine 16 (bzw. den Stator 18 und/oder den Rotor 20) und anschließend zurück in den Kühlmittelsumpf 36 gleitet.

Die Steuereinrichtung 28 umfasst vorliegend sechs Ventile 42. Ein erstes Ventil 44 und ein zweites Ventil 46 sind in Förderrichtung des Kühlmittels 14 vor der Parksperre 24 angeordnet. Ein drittes Ventil 48 ist in Förderrichtung des Kühlmittels 14 vor der Koppeleinrichtung 26 angeordnet. Ein viertes Ventil 50 ist in Förderrichtung des Kühlmittels 14 vor dem Wärmetauscher 30 angeordnet. Ein fünftes Ventil 52 ist in Förderrichtung des Kühlmittels 14 vor der elektrischen Maschine 16 (bzw. dem Stator 18 und dem Rotor 20) angeordnet. Ein sechstes Ventil 54 ist in Förderrichtung des Kühlmittels 14 vor dem Getriebe 22 angeordnet. Mittels der Ventile 42 kann ein Kühlmittelfluss durch die jeweiligen Komponenten gesteuert werden.

So kann das Kühlmittel 14 bzw. der Kühlmittelfluss zum Betätigen der Parksperre 24 mittels des ersten Ventils 44 und/oder des zweiten Ventils 46 an die Parksperre 24 geleitet werden. Vorliegend sind das erste Ventil 44 und das zweite Ventil 46 jeweils als ein in einem separaten Kühlmittelpfad angeordnetes Schaltventil ausgebildet. Es kann bspw. ein Blockieren (bzw. ein Unterbrechen) einer Drehmomentübertragung innerhalb der Antriebsanordnung 10 mittels der Parksperre 24 mittels des ersten Ventils 44 gesteuert werden. Alternativ oder zusätzlich kann das Freigeben der Drehmomentübertragung innerhalb der Antriebsanordnung 10 mittels der Parksperre mittels des zweiten Ventils 46 gesteuert werden.

Das Kühlmittel 14 bzw. der Kühlmittelfluss kann zum Betätigen der Koppeleinrichtung 26 mittels des dritten Ventils 48 gesteuert werden. Das dritte Ventil 48 ist vorliegend als ein Regelventil ausgebildet.

Das Kühlmittel 14 bzw. der Kühlmittelfluss kann mittels des vierten Ventils 50 wahlweise durch den Wärmetauscher 30 oder durch die Bypass-Leitung 34 am Wärmetauscher 30 vorbei geleitet werden. Das vierte Ventil 50 ist vorliegend als ein Schaltventil ausgebildet.

Das Kühlmittel 14 bzw. der Kühlmittelfluss kann mittels des fünften Ventils 52 durch die elektrische Maschine 16 bzw. durch den Stator 18 und/oder den Rotor 20 gesteuert werden. Das fünfte Ventil 52 ist vorliegend als ein Regelventil, das den Kühlmittelfluss in mindestens zwei, insbesondere vier, vom fünften Ventil 52 ausgehenden Kühlmittelpfaden regelt, ausgebildet, wobei mindestens ein Kühlmittelpfad, insbesondere zwei Kühlmittelpfade, in den Stator 18 und/oder mindestens ein Kühlmittelpfad, insbesondere zwei Kühlmittelpfade, in den Rotor 20 münden.

Das Kühlmittel 14 bzw. der Kühlmittelfluss kann mittels des sechsten Ventils 54 durch das Getriebe 22 gesteuert werden. Das sechste Ventil 54 ist vorliegend als ein Schaltventil ausgebildet.

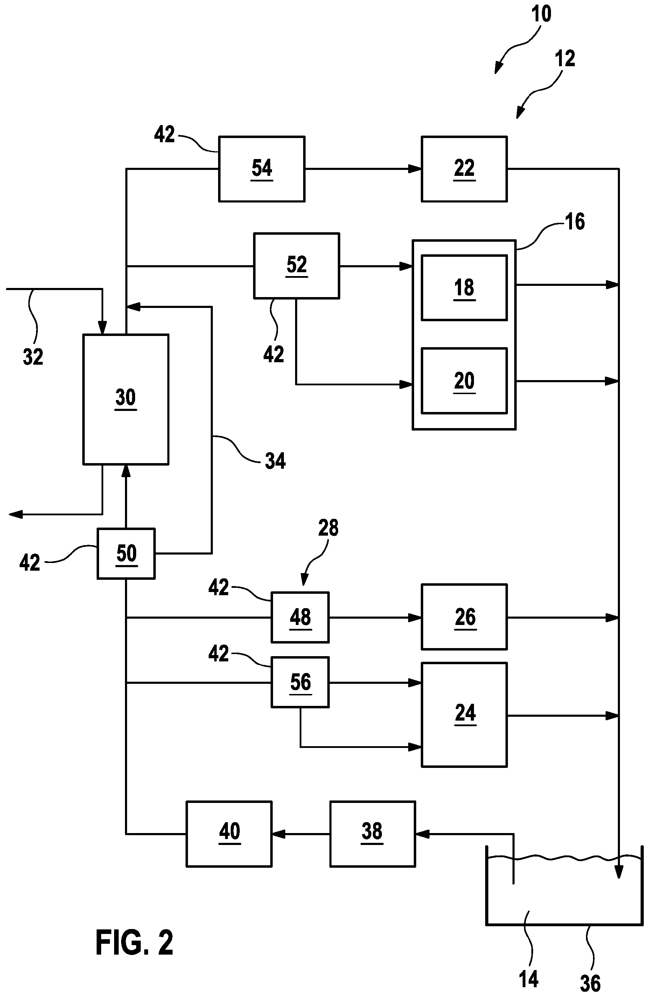

Figur 2 zeigt eine schematische Darstellung der Antriebsanordnung 10 nach einem zweiten Ausführungsbeispiel. Das zweite Ausführungsbeispiel unterscheidet sich von dem ersten durch Folgendes:
Die Steuereinrichtung 28 weist anstelle des ersten Ventils 44 und des zweiten Ventils 46 vorliegend nur ein (einzelnes) Parksperren-Ventil 56 auf. Das Parksperren-Ventil 56 ist in Förderrichtung des Kühlmittels 14 vor der Parksperre 24 angeordnet. Mittels des Parksperren-Ventils 56 kann das Kühlmittel 14 bzw. der Kühlmittelfluss zum Betätigen der Parksperre 24 an die Parksperre 24 geleitet bzw. gesteuert werden. Das Parksperren-Ventil 56 ist vorliegend als ein Regelventil, das den Kühlmittelfluss in zwei vom Parksperren-Ventil 56 ausgehenden und in die Parksperre 24 mündenden Kühlmittelpfaden regelt, ausgebildet, wobei ein Kühlmittepfad zum Blockieren und ein Kühlmittelpfad zum Freigeben der Drehmomentübertragung innerhalb der Antriebsanordnung 10 dient.

Das dritte Ventil 48 ist vorliegend als ein Schaltventil ausgebildet.

## Patentansprüche

1. Antriebsanordnung (10) für ein Fahrzeug, insbesondere ein Kraftfahrzeug, mit einem Kühlkreislauf (12), in dem ein Kühlmittel (14) gefördert wird, umfassend:
- eine elektrische Maschine (16) mit einem Stator (18) und einem Rotor (20),
- ein Getriebe (22) zum Übertragen eines Drehmoments innerhalb der Antriebsanordnung (10),
- eine Parksperre (24) zum Blockieren und/oder Freigeben einer Drehmomentübertragung innerhalb der Antriebsanordnung (10) und/oder eine Koppeleinrichtung (26) zum Koppeln und/oder Trennen von mindestens zwei Komponenten der Antriebsanordnung (10),
- eine Steuereinrichtung (28) zum Steuern eines Kühlmittelflusses durch den Kühlkreislauf (12), wobei die Steuereinrichtung (28) eingerichtet ist, um die Parksperre (24) und/oder die Koppeleinrichtung (26) jeweils mittels des Kühlmittels (14) zu betätigen.

2. Antriebsanordnung (10) nach Anspruch 1, **dadurch gekennzeichnet, dass** die Steuereinrichtung (28) zum Steuern eines Kühlmittelflusses durch die elektrische Maschine (16), den Stator (18), den Rotor (20) und/oder das Getriebe (22) eingerichtet ist.

3. Antriebsanordnung (10) nach Anspruch 1 oder 2, **dadurch gekennzeichnet, dass** der Kühlkreislauf (12) einen Wärmetauscher (30) zum Abtransport von Wärme umfasst, insbesondere wobei der Wärmetauscher (30) mit einem externen Kühlkreislauf (32) thermisch gekoppelt ist.

4. Antriebsanordnung (10) nach Anspruch 3, **dadurch gekennzeichnet, dass** der Wärmetauscher (30) mittels einer Bypass-Leitung (34) überbrückbar ausgebildet ist, wobei die Steuereinrichtung (28) zum Steuern eines Kühlmittelflusses über den Wärmetauscher (30) eingerichtet ist.

5. Antriebsanordnung (10) nach einem der voranstehenden Ansprüche, **dadurch gekennzeichnet, dass** der Kühlkreislauf (12) einen Kühlmittelsumpf (36) zum Bevorraten des Kühlmittels (14), einen Filter (38) zum Filtern des Kühlmittels (14) und eine Kühlmittelpumpe (40) zum Fördern des Kühlmittels (14) innerhalb des Kühlkreislaufes (12) umfasst.

6. Antriebsanordnung (10) nach Anspruch 5, **dadurch gekennzeichnet, dass** die Kühlmittelpumpe (40) als eine Niederdruckpumpe ausgebildet, insbesondere wobei die Kühlmittelpumpe (40) zur Erzeugung eines Druckes von maximal 10 bar eingerichtet ist.

7. Antriebsanordnung (10) nach einem der voranstehenden Ansprüche, **dadurch gekennzeichnet, dass** die Steuereinrichtung (28) mindestens ein Ventil (42), insbesondere ein thermostatisches Ventil, ein elektrohydraulisches Ventil, ein Schaltventil und/oder ein Regelventil, umfasst oder daraus ausgebildet ist.

8. Antriebsanordnung (10) nach einem der voranstehenden Ansprüche, **dadurch gekennzeichnet, dass** die Koppeleinrichtung (26) als eine Trennkupplung, Lamellenkupplung und/oder Klauenkupplung ausgebildet ist.

9. Antriebsanordnung (10) nach einem der voranstehenden Ansprüche, **dadurch gekennzeichnet, dass** die Koppeleinrichtung (26) mittels mindestens eines Hydraulikzylinders betätigbar ausgebildet ist.

10. Fahrzeug, insbesondere Kraftfahrzeug, umfassend eine Antriebsanordnung (10) nach einem der voranstehenden Ansprüche.
